# EUROPÄISCHE PATENTSCHRIFT

(11) **EP 0 953 147 B1**
(45) Veröffentlichungstag und Bekanntmachung des Hinweises auf die Patenterteilung: **26.03.2003**
(21) Anmeldenummer: 98902957.4
(22) Anmeldetag: 09.01.1998
(51) Int. Cl.: G01M 5/00

(54) **VERFAHREN ZUM PRÜFEN DER STANDFESTIGKEIT VON STEHEND VERANKERTEN MASTEN**
METHODS FOR TESTING THE STABILITY OF VERTICALLY BRACED MASTS
PROCEDES POUR VERIFIER LA STABILITE DE MATS ANCRES VERTICALEMENT

(30) Priorität: 16.01.1997 DE 19701247
(43) Veröffentlichungstag der Anmeldung: 03.11.1999
(73) Patentinhaber: Roch, Mathias, 23566 Lübeck (DE); Roch, Oliver, 23623 Gnissau (DE)
(72) Erfinder: Roch, Mathias, 23566 Lübeck (DE); Roch, Oliver, 23623 Gnissau (DE)
(74) Vertreter: Wilcken, Thomas, Dipl.-Ing.
(86) Internationale Anmeldenummer: DE9800094
(87) Internationale Veröffentlichungsnummer: WO98031999

(56) Entgegenhaltungen:
- EP-A- 0 638 794
- DE-C- 19 540 319
- DE-U- 9 404 664
- DE-U- 29 607 045
- US-A- 4 335 520
- US-A- 5 212 654
- KRISHNASAMY S G ET AL: "TESTING OF LATTICE TOWERS FOR ONTARIO HYDRO TRANSMISSION LINE REFURBISHMENT PROGRAM" IEEE TRANSACTIONS ON POWER DELIVERY, Bd. 5, Nr. 3, 1.Juli 1990, Seiten 1474-1483, XP000147670
- PATENT ABSTRACTS OF JAPAN vol. 014, no. 355 (M-1004), 31.Juli 1990 & JP 02 125120 A (MITSUBISHI ELECTRIC CORP), 14.Mai 1990,

## Beschreibung

Die Erfindung betrifft Verfahren zum Prüfen der Standfestigkeit von stehend verankerten Masten.

In der EP 0 638 794 A1 ist ein Verfahren zum Prüfen der Stand- und Biegefestigkeit eines stehend verankerten Mastes beschrieben, bei dem der Mast einem Biegemoment ausgesetzt wird, indem er mit einer oberhalb seiner Verankerung eingeleiteten und im Verlauf des Prüfvorganges ansteigenden Kraft belastet wird, deren gemessener Wert und Verlauf zur Bestimmung der Festigkeit des Mastes herangezogen werden. Sowohl die erwähnte Kraft als auch die Strecke, um die der Mast an einer ausgewählten Stelle aufgrund des Biegemomentes seitlich ausgelenkt wird, werden zeitgleich mit Sensoren gemessen.

Eine lineare Abhängigkeit der erwähnten Strecke von der eingeleiteten Kraft wird als Aussage für eine im Bereich der elastischen Verformung liegende Mastauslenkung verwertet, während die Feststellung einer nicht linearen Abhängigkeit der von den Sensoren gemessenen Werte als Aussage für eine plastische Verformung und/oder für eine nicht stabile Verankerung des dann als nicht biegefest bzw. nicht standfest erkannten Mastes verwertet und der Prüfvorgang durch Entlasten des Mastes abgebrochen wird. Im übrigen wird der Prüfvorgang durch Entlasten des Mastes erst dann abgebrochen, wenn ein vorgegebener Sollwert des Biegemomentes im elastischen Bereich der Verformung erreicht wird, was bedeutet, daß der Mast ausreichend stand- und biegefest ist und nicht gegen einen anderen ausgewechselt werden muß.

Mit diesem Verfahren ist es nicht möglich festzustellen, ob der jeweils geprüfte Mast trotz einer im elastischen Bereich liegenden Verformung bis zum Erreichen der Prüflast z. B. durch einen Riß oder durch einen den Mast ggf. durchsetzenden Korrisionsbereich geschädigt ist, so daß es für den Fall eines solchen Schadens möglicherweise zu einer falschen Beurteilung der verbleibenden Festigkeit des Mastes kommen kann, weil beispielsweise bei Anwendung dieses Verfahrens ein linearer Verlauf der Funktion f = F(S), wobei F die eingeleitete Kraft und S die seitliche Mastauslenkung oder der sich im Belastungsfall ändernde Biegewinkel des Mastes bedeuten, vortäuschen könnte, daß der Mast nicht geschädigt ist.

Dieses Problem wird mit dem im Gebrauchsmuster DE 296 07 045 U beschriebenen Verfahren gelöst, bei dem mittels einer Krafteinheit der Mast oberhalb seiner Verankerung in gleicher Prüfebene von der Seite her nacheinander mit einer Druckkraft und einer Zugkraft, also mit entgegengesetzt gerichteten Biegemomenten belastet wird, so daß sich für beide Belastungsfälle zwei Funktionen fₓ und f_{y} ergeben werden und in einer Auswerteeinheit verarbeitet und verglichen werden können. Außerdem werden diese Funktionen zweckmäßigerweise auf einem Monitor und/oder mit einem Drucker graphisch zur gleichzeitigen Begutachtung bzw. nachträglichen Auswertung dargestellt.

Diese Funktionen sind bei angenommenem geraden Verlauf insbesondere insofern aussagekräftig, als sie Auskunft darüber geben, ob ein beispielsweise durch einen Riß im Mast gegebener Schaden vorliegt und wo sich dieser Schaden befindet.

Wenn beide Funktionen fₓ, f_{y} den gleichen Verlauf und somit die gleiche Steigung haben, läßt dies darauf schließen, daß jedenfalls kein Schaden des Mastes in der vertikalen Prüfebene und im unmittelbar neben dieser Ebene befindlichen Mastbereich vorliegen wird. Falls dagegen die Verläufe der beiden auf den gleichen Nullpunkt bezogenen Funktionen fₓ, f_{y} divergieren und somit unterschiedliche Steigungen haben, läßt dies auf einen Mastschaden schließen, selbst wenn die aus den beiden Funktionen gewonnenen Kennlinien linear bzw. gerade verlaufen, weil sich ein z.B. mit einem Riß behafteter Mast sogar nach einer begrenzten Weiterbildung des Risses bei zunehmender Belastung des Mastes weiter elastisch verhalten wird und sich eine Rißbildung höchstens in einem kleinen Knick in der im übrigen weiter linear verlaufenden Kennlinie auswirken wird.

Wie bereits erwähnt wurde, kann aus den beiden in gleicher Prüfebene gewonnenen Funktionen und deren Verläufen auch auf den Ort des Schadens geschlossen werden. Wenn nämlich z.B. die beim Druckvorgang ermittelte Funktion fₓ eine größere Steigung als die beim Zugvorgang festgestellte Funktion f_{y} haben sollte, wird dies bedeuten, daß sich der Riß auf der Seite des Mastes befinden wird, an welcher die Zugkraft eingeleitet wurde, da zu erwarten ist, daß sich der Mast aufgrund einer geringen Aufweitung eines quer verlaufenden Risses, ohne daß dieser dabei größer werden müßte, elastischer verhalten wird als bei entgegengesetzt gerichtet eingeleiteter Druckkraft, bei der sich gegenüberliegende Rißflächen zusammengepreßt werden und sich der Mast bei dieser Belastungsrichtung wie einer ohne Rißbildung weniger elastisch verhalten wird.

Allen vorher abgehandelten Verfahren ist der Nachteil gemeinsam, daß bei ihnen nicht der Umstand exakt berücksichtigt werden kann, daß der Mast bzw. seine Verankerung bei den jeweiligen Belastungsfällen seine bzw. ihre Position im oder am Boden verändern kann. Jedenfalls kann es passieren, daß es bei den Prüfvorgängen beispielsweise dazu kommen kann, daß Bewegungen und ein Kippversatz des Mastes oder seiner Verankerung auf oder im Boden auftreten und dabei Bodenmaterial durch Kippen des Mastes bzw. seiner Verankerung bleibend verschoben wird, was sich natürlich auf den Verlauf der Funktionen f so auswirken würde, daß diese nicht mehr eine eindeutige Aussage über die Festigkeit des Mastes als solchen geben werden.

Insbesondere dieser Nachteil soll durch die Erfindung beseitigt werden, indem ein Verfahren vorgeschlagen wird, mit dem auf sehr einfache und vor allem sichere Weise eine aussagekräftige Entscheidung und Beantwortung der Frage erreicht werden kann, ob einerseits ein geprüfter Mast ausreichend standfest ist und ob andererseits die gewonnenen Meßergebnisse darauf schließen lassen, ob ein Versatz des Mastes bzw. seiner Verankerung im Boden vorliegt, wobei selbst bei Feststellung eines solchen Versatzes dennoch eine Aussage möglich sein soll, ob der Mast geschädigt ist oder nicht.

Die Lösung der Aufgabe ist im Patentanspruch 1 oder im Patentanspruch 2 angegeben.

Mit der Lösung nach dem erfindungsgemäßen Verfahren (Anspruch 1) ist es auf überraschende und sehr einfache Weise möglich, den Zustand des Systemes Mast/Verankerung und auch den Zustand sowohl der Verankerung des Mastes im Erdboden als auch des Mastes selbst bei der Prüfung zu erfasssen und zwar auch dann, wenn bei der Prüfung des Systemes die maximale Prüfkraft nicht erreicht worden ist. Es wird klar erkennbar, ob sich die Verankerung und/oder der Mast stabil bzw. standfest verhalten hat. Bezüglich der Verankerung ist also erkennbar, ob sie allen auf sie einwirkenden Kräften widerstanden und sich demgemäß nicht bewegt hat oder ob sie auch bei Erreichen oder Nichterreichen der maximalen Prüfkraft nachgegeben hat, sich also bewegt und in der Regel eine Kippbewegung durchgeführt hat. Es gibt nämlich in der Praxis Situationen, wo nicht unbedingt an der Verankerung selbst und/oder an der Bodenumgebung der Verankerung erkennbar ist, ob eine Kippbewegung und damit ein Kippversatz der Verankerung beim Prüfvorgang stattgefunden hat. Weiter ist erkennbar, ob bei Kippversatz des Mastes selbst und seiner Verankerung eine Schädigung des Mastes vorliegt oder nicht. Ferner ist auch erkennbar, ob bei stabil gebliebener Verankerung eine Mastschädigung vorliegt oder nicht.

Ein wesentlicher Grund für die Gewinnung aussagefähiger Ergebnisse bei der Prüfung des Systemes Mast/Verankerung besteht im einfachsten Prüfungsfall erfindungsgemäß ausschließlich in der Aufzeichnung und Auswertung der gegebenenfalls vorhandenen, verbleibenden seitlichen Restauslenkung der sich an eine Belastung des Mastes anschließenden Entlastung. Stellt sich bei der Prüfung heraus, daß die betreffende, nach der vollständigen Entlastung des Mastes auf den Wert null reduzierte Rückstellkraft zu einer bleibenden Restauslenkung geführt hat, dann liegt ein Schaden des Mastes und/oder ein Kippversatz der Mastverankerung vor.

Das erfindungsgemäße Verfahren erlaubt also gegenüber den bisher bekannten Verfahren auf sehr einfache und schnelle Weise eine gesteigerte Aussagefähigkeit über das geprüfte System Mast und seine Verankerung.

Zur weiteren Steigerung der Aussagefähigkeit über die Schädigung des Mastes und seiner Verankerung (Anspruch 2) werden je Prüfebene zwei in entgegengesetzte Richtungen wirkende Prüfkräfte auf den Mast aufgebracht, um eventuell bleibende Restauslenkungen nach den Entlastungen festzustellen. Das heißt, je Prüfebene wird z.B. eine Druckbelastung in der einen Richtung und eine Zugbelastung in der entgegengesetzten Richtung angewendet. Man erhält hierbei gegebenenfalls zwei bleibende Restauslenkungen. Ferner wird als eine Alternative wenigstens beim zweiten Prüfvorgang mindestens teilweise eine Belastungskennlinie ermittelt und aufgezeichnet, und zwar deren Anfangs- oder Endverlauf. Als weitere Alternative können auch die höchsten Prüfkraftwerte gemessen und zur Auswertung mit herangezogen werden. Aus einem Vergleich dieser Restauslenkungen mit der teilweisen Belastungskennlinie oder mit den höchsten Prüfkraftwerten ergibt sich eine noch genauere Aussage über eine Schädigung oder Nichtschädigung von Mast und/oder seiner Verankerung, insbesondere über die Schadensart des Mastes.

Die Aussagefähigkeit der Gesamtprüfung kann noch weiter gesteigert werden, indem eine Mehrzahl von Prüfebenen angewendet wird, insbesondere wenn dabei je Ebene in zwei entgegengesetzten Richtungen geprüft wird.

Die Erfindung ist nachstehend anhand mehrerer, in den anliegenden Zeichnungen dargestellter Ausführungsbeispiele näher erläutert. Es zeigen:
- Fig. 1: einen schematischen und stark vereinfachten Aufbau einer Vorrichtung in Verbindung mit einem damit zu prüfenden Mast und seiner Verankerung,
- Fig. 2: Prüfungsvorgänge an einem Mast und seiner Verankerung mit der Vorrichtung nach Fig. 1,

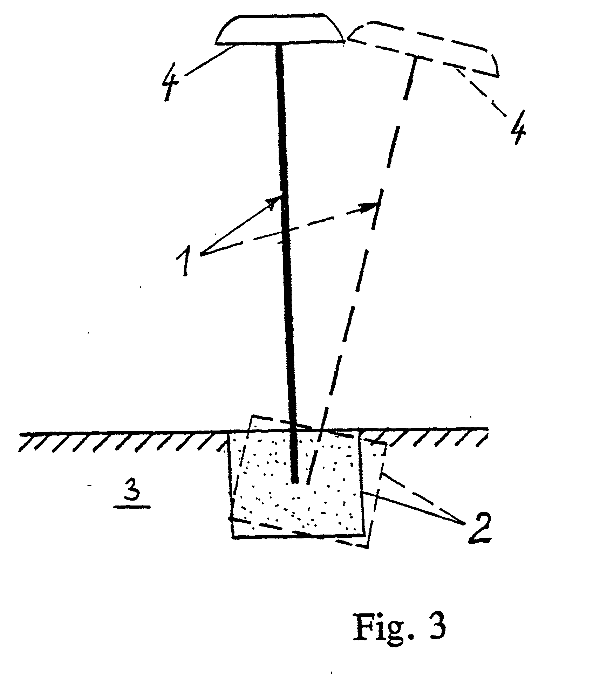

- Fig. 3: das System Mast und seine Verankerung in einwandfreiem und in versetztem Zustand,
- Fig. 4: das Diagramm eines Prüfvorganges, bei dem der Mast in einer vertikalen Ebene nur einmal belastet und anschließend wieder entlastet wird,
- Fig. 5 bis 9: Diagramme, die Belastungs- und Entlastungsvorgänge bei einem innerhalb einer verikalen Ebene in zwei einander entgegengesetzten Richtungen geprüften Mast einschließlich seiner Verankerung zeigen.

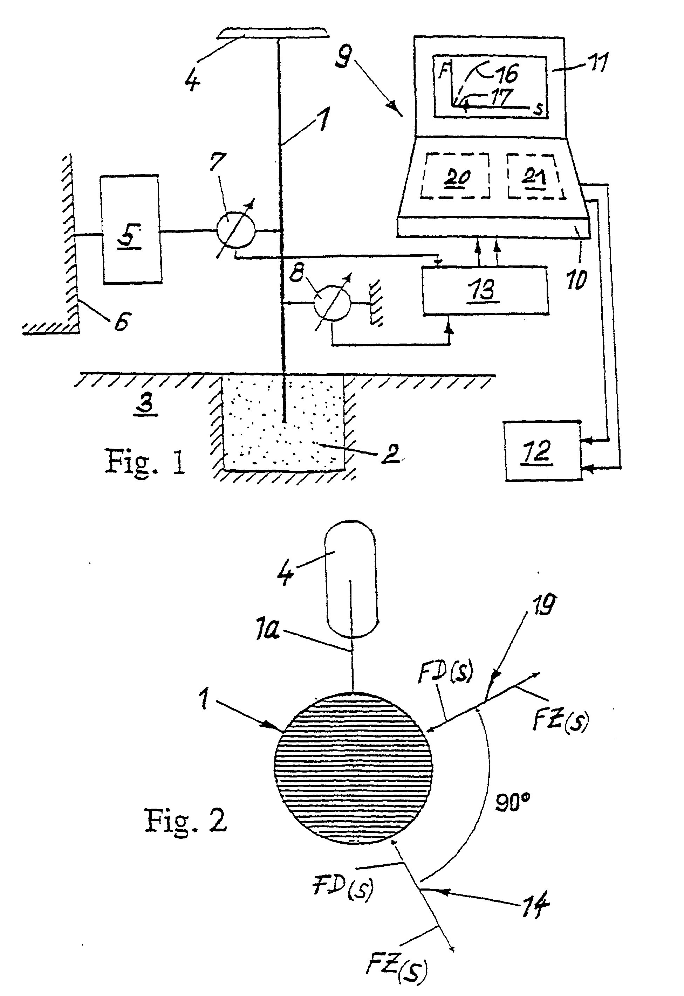

Gemäß den Figuren 1 und 2 ist ein Mast 1 mittels einer Verankerung 2 stehend im Erdboden 3 befestigt. Der Mast 1 sei beispielsweise ein Lichtmast, der gegebenenfalls an seinem Oberende eine Ausleger 1a aufweist, an dessen Ende eine Straßenbeleuchtung 4 angebracht ist.

Zum besseren Verständnis der Erfindung ist zunächst eine Vorrichtung zum Prüfen der Standfestigkeit des Mastes 1 einschließlich seiner Verankerung 2 beschrieben. Sie umfaßt eine Krafteinheit 5, die beispielsweise an einem mobilen, schematisch angedeuteten Fahrzeug 6 anbringbar ist, einen Kraftsensor 7, der sich zwischen der Krafteinheit 5 und dem Mast 1 befindet, einen vorzugsweise als Wegstreckensensor ausgebildeten Wegsensor 8, der in derselben vertikalen Prüfebene der Einheit 5 und des Kraftsensor 7, beispielsweise auf der anderen Seite des Mastes, angeordnet ist, sowie eine mit dem Kraftsensor und dem Wegsensor verschaltete Auswerteeinheit 9. Diese Auswerteeinheit umfaßt einen Rechner 10, z.B. einen Personalcomputer, der mit einem Monitor 11 und/oder einem Drucker 12 verbunden ist. Ferner ist ein Transmitter 13 vorgesehen, der die Signale des Kraftsensors und des Wegsensors 8 in aufbereiteter Form dem Rechner 10 zuleitet. Der genauere, hier nicht weiter entscheidende Aufbau der vorstehend beschriebenen Vorrichtung kann so ausgeführt sein, wie es in der DE-U-94 04 664 beschrieben ist.

Der Auswerteeinheit 9 ist derart ausgestaltet, daß sowohl Druckkraftmeßergebnisse als auch Zugkraftmeßergebnisses in der jeweiligen Prüfungsebene und jeweils bezogen auf die zugehörige Mastauslenkung gemeinsam angezeigt werden. Die Ausgestaltung der Einheit 9 umfaßt somit Mittel 20 zum Feststellen von Belastungskennlinien und von nach Entlastungen eventuell verbleibenden Restauslenkungen. Hierzu können entsprechend programmierbare Rechnerbausteine verwendet werden. Die Einheit 9 kann auch weitere elektrische Verarbeitungsschaltkreise 21 enthalten, um die erhaltenen Kurven bzw. Kennlinien und Restauslenkungen im Verhältnis zueinander in der Auswerteeinheit zur Feststellung eines Schadens automatisch auszuwerten. Die ermittelten Meß- und Rechenwerte sowie Schadensfeststellungen können optisch (symbolisch oder alphabetisch) auf dem Monitor angezeigt und/oder mit dem Drucker dargestellt werden.

Die Prüfung des Mastes und seiner Verankerung auf Standfestigkeit wird wie folgt durchgeführt.

Es wird zunächst eine erste vertikale Prüfungsebene ausgewählt, in welcher der Mast 1 mittels einer Kraft, die oberhalb der Mastverankerung 2 an vorbestimmter Stelle am Mast vorteilhaft horizontal angreift, belastet wird, d.h. auf Biegung beansprucht wird. Vorzugsweise wird eine solche Ebene ausgewählt werden, in welcher die Hauptbelastung des Mastes liegt. Hierbei wird vorzugsweise die Belastung des Mastes durch Windkräfte berücksichtigt. Eine solche vertikale Prüfungsebene ist in Fig. 2 mit dem Bezugszeichen 14 angedeutet.

Es sei angenommen, daß zunächst eine Druckkraft kontinuierlich ansteigend auf den Mast ausgeübt wird. Der an vorbestimmter Stelle oberhalb der Verankerung 2 an den Mast 1 angeschlossene Wegsensor 8 umfaßt bei diesem Beispiel die zur entsprechenden Druckkraft FD gehörenden, seitlichen Auslenkungen S. Beide Werte werden dabei zeitgleich und fortlaufend in den Transmitter 13 eingegeben, der sie wiederum entsprechend vorbereitet in den Rechner 10 eingibt. Dieser verarbeitet entsprechend einem Programm die eintreffenden Meßwerte, d.h. er setzt sie in ein Verhältnis, und zwar als Funktion f von der Kraft FD in Abhängigkeit von der zugehörigen Mastauslenkung S. Es entsteht so eine momentane Belastungskennlinie 16, wie es auf dem Monitor 11 zu sehen ist. Alternativ oder zusätzlich kann diese Kennlinie 16 auch auf dem mit dem Rechner 10 verbundenen Drucker 12 ausgedruckt und somit dokumentiert werden. Die Ermittlung einer vollständigen Belastungskennlinie ist nicht undbedingt nötig, es genügt auch ein teilweiser Verlauf. Alternativ genügt auch die Feststellung der höchsten Prüfkraftwerte.

Nach Erreichen der vorbestimmten Prüfkraft im elastischen Verformungsbereich des Mastes wird die weiter als Druckkraft wirkende Prüfkraft kontinuierlich fallend verringert, bis sie den Wert null erreicht hat. Eine hierbei eventuell verbleibende Restauslenkung ist mit 17 angedeutet und wird auf dem Monitor 11 angezeigt und/oder mit dem Drucker 12 aufgezeichnet. Anhand einer gegebenenfalls verbleibenden Restauslenkung S kann schon eine Auswertung über die Standsicherheit des Mastes und seiner Verankerung erfolgen.

Zur gesteigerten Aussagefähigkeit der Standfestigkeit oder Standsicherheit des Mastes 1 und/oder seiner Verankerung ist es vorteilhaft, in derselben vertikalen Prüfungsebene 14 in entgegengesetzter Richtung zur ersten Prüfkraft eine zweite Prüfkraft F anzuwenden. Wenn die erste Prüfkraft eine Druckkraft FD ist, ist die zweite Prüfkraft vorzugsweise eine Zugkraft FZ, die kontinuierlich ansteigend und anschließend wieder abfallend ausgeübt wird, wobei bei abfallender Prüfkraft eine gegebenenfalls verbleibende Restauslenkung S gemessen und ausgewertet wird. Zumindest beim zweiten Prüfvorgang wird eine Belastungskennlinie wenigstens teilweise ermittelt und zur Auswertung aufgezeichnet.

Zur noch weiteren Steigerung der Aussagefähigkeit der Standfestigkeit des Mastes 1 und seiner Verankerung 2 kann der Mast in wenigstens einer weiteren vertikalen Prüfungsebene 19 wie vorstehend erläutert geprüft werden, und zwar entweder in einem einzigen Prüfvorgang oder in zwei einander entgegengesetzten Prüfvorgängen. Diese weitere Prüfungsebene verläuft vorzugsweise im rechten Winkel zur ersten vertikalen Prüfungsebene 14.

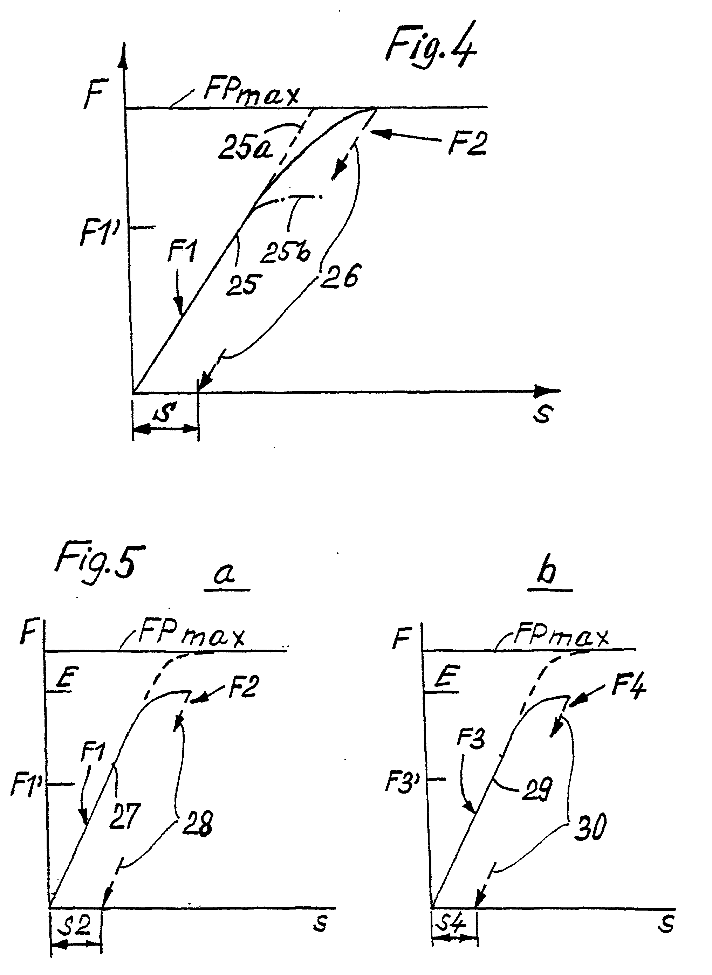

Die Diagramme der nachstehend beschriebenen Figuren 4 bis 9b geben die Meß- und Rechenergebnisse sowie die daraus gewonnenen Schadensfeststellungen in nur einer einzigen vertikalen Prüfungsebene wieder. Sie gelten sinngemäß auch für mehrere ausgewählte vertikale Prüfungsebenen.

Das Diagramm nach Figur 4 bezieht sich auf einen einzigen Prüfungsvorgang. Es sei angenommen, daß der Mast 1 in einer ausgewählten Höhe oberhalb seiner Verankerung 2 einer horizontal wirkenden Biegekraft F1 ausgesetzt wird, die sich über den Mast auch auf seine Verankerung auswirkt. Die Biegekraft wird bis zu einer vorbestimmten, maximalen Prüfkraft FP max auf den Mast aufgebracht, wobei sich der Mast seitlich auslenkt. Zu der jeweiligen, momentanen Biegekraft ergibt sich eine zugehörige seitliche Auslenkung insbesondere des Mastes, so daß nach der Funktion f = F (S) ein den Mast belastender Kraftverlauf nach der in Figur 4 ausgezogenen Linie 25 errechnet wird. Diese Belastungslinie 25 steigt zunächst gleichmäßig an und nimmt in ihrem oberen Bereich, wie hier dargestellt, z.B. eine flacher werdende Steigung an. Hierbei kann die maximale Prüfkraft erreicht werden. Vorteilhaft wird die Belastungslinie 25 auf dem Monitor angezeigt. Nach dem Erreichen der maximalen Prüfkraft wird der Mast 1 durch Zurücknahme der Biegekraft entlastet, wobei auch die seitliche Auslenkung wieder geringer wird. Die Entlastung des Mastes ist mit dem Pfeil 26 angedeutet. Hierbei werden die geringer werdende Entlastungskraft und die zugehörige, sich entsprechend reduzierende seitliche Auslenkung während der Entlastung im wesentlichen nicht gemessen. Jedoch wird am Ende des Entlastungsvorganges gemessen, ob bei der auf den Kraftwert Null zurückgeführten Mastentlastung eine seitliche Auslenkung verblieben ist, wie es in Figur 4 mit S angedeutet ist. Bei der Mastentlastung wird also ausschließlich als wichtiges Kriterium festgehalten und ausgewertet, ob eventuell eine seitliche Auslenkung des Systemes Mast und seiner Verankerung verblieben ist. Im vorliegenden Fall ist gemäß Figur 4 eine bleibende seitliche Auslenkung S festgestellt worden. Daraus ergibt sich mit Hilfe der automatischen Auswerteeinheit 9, daß der Mast und/oder seine Verankerung mit einem Schaden behaftet ist bzw. sind. Dieses Ergebnis kann auch eintreten, wenn die maximale Prüfkraft nicht erreicht wird und der Prüfvorgang vorher abgebrochen werden muß, wie es strichpunktiert mit 25b in Figur 4 angedeutet ist.

Wenn sich bei der Belastung ergibt, daß die Belastungslinie 25 sich in ihrem oberen Verlauf nicht ändert, sondern gerade weiterverläuft, wie es mit 25a in Figur 4 gestrichelt angedeutet ist, so folgt daraus im Regelfall, daß auch bei der Entlastung des Mastes eine bleibende seitliche Auslenkung nicht festgestellt werden kann. In diesem Fall ist kein Schaden am Mast und/oder seiner Verankerung gegeben.

In Figur 4 ist die beispielsweise ermittelte Belastungskennlinie 25 in ihrer vollständigen Länge, also von einer definierten Anfangskraft mit dem Wert gleich Null beginnend, dargestellt. Man kann jedoch auch so vorgehen, daß nur ein Teilverlauf der Belastungslinie 25 ermittelt wird, zum Beispiel die obere Hälfte oder ein oberer Endverlauf der Belastungslinie 25. In diesem Fall beginnt die Ermittlung der Belastungskennlinie 25 z.B. definiert bei der Kraft F1' und der hierzu gehörenden seitlichen Mastauslenkung. Eine solche Vorgehensweise kann auch bei allen nachstehend beschriebenen Ausführungsbeispielen angewendet werden.

Wenn es bei Feststellung eines Schadens nach dem vorstehend erläuterten Beispiel gewünscht wird zu wissen, ob der Schaden nur den Mast oder nur seine Verankerung oder beides betrifft, so wird in der selben vertikalen Prüfungsebene ein weiterer Prüfungsvorgang vorgenommen, bei dem die zweite Biegekraft zur vorangegangenen Biegekraft entgegengesetzt gerichtet ist. War die erste Biegekraft eine Druckkraft, so wird die zweite Biegekraft eine Zugkraft sein, um eine Umpositionierung der für die Prüfung verwendeten Vorrichtung zu vermeiden. In den Figuren 5 bis 9 ist eine solche Prüfung dargestellt.

Gemäß Figur 5a wird der zu prüfende Mast in einem ersten Prüfvorgang mit einer beispielsweise stetig ansteigenden Biegekraft F1 belastet, so daß sich in Verbindung mit der zugehörigen Mastauslenkung S nach der Funktion f1 = F1 (S) eine Belastungskennlinie 27 ergibt. Man erkennt, daß die angestrebte maximale Prüfkraft FPmax nicht erreicht wird, sondern daß die Linie 25 vorher mit ihrer Steigung immer flacher wird und in ihrem oberen Endabschnitt in eine gekrümmte Form übergeht. Dieser erste Prüfvorgang wird an dieser Stelle abgebrochen, und es erfolgt aufgrund der noch vorhandenen Elastizität des Mastes eine Rückfederung des Systems Mast/Verankerung. Die Entlastung des genannten Systems erfolgt durch Rücknahme der ersten Biegekraft auf den Wert Null gemäß dem Pfeil 28, wobei ausschließlich eine eventuell verbleibende Restauslenkung des Systems gemessen und ausgewertet wird. Man erkennt im vorliegenden Fall, daß nach der auf Null zurückgeführten Biegekraft eine bleibende Restauslenkung S2 gegeben ist, die am Monitor zahlenmäßig oder symbolisch abgelesen und/oder mit dem Drucker dokumentiert wird.

Gemäß Figur 5b wird in derselben vertikalen Prüfebene ein zweiter Prüfvorgang durchgeführt, und zwar in derselben Weise, wie es vorstehend in Verbindung mit Figur 5a beschrieben ist. Die zweite Biegekraft F3 führt zu einer Belastungskennlinie 29, wobei diese Linie vor erreichen der maximalen Prüfkraft FPmax wiederum in eine flacher werdende Krümmung im oberen Abschnitt übergeht. Die sich daran anschließende Entlastung ist mit dem Pfeil 30 angedeutet, wobei wiederum nach Beendigung der Entlastung ausschließlich auf eine eventuell verbleibende seitliche Auslenkung geachtet wird. Im vorliegenden Fall ergab sich bei der Entlastung eine bleibende Restauslenkung S4 des genannten Systems, die gemessen und ausgewertet wird.

Bei dieser Gesamtprüfung wurde bei beiden Prüfvorgängen die maximale Prüfkraft FPmax nicht erreicht, wie es mit E in den Figuren angedeutet ist. Jedoch kann es auch Fälle geben, wo die maximale Prüfkraft erreicht wird. Dies ist in den Figuren 5a und 5b gestrichelt angedeutet. Ferner kann, wie bereits vorstehend angedeutet, bei diesem gesamt Prüfvorgang ebenfalls so vorgegangen werden, daß die Belastungskennlinien 27 und 29 erst dann ermittelt und aufgezeichnet werden, wenn nur deren oberer Verlauf festgehalten werden soll. In diesem Fall beginnt die Berechnung des gewünschten Linienverlaufs beispielsweise erst dann, wenn die beiden Prüfbiegekräfte den Wert F1' bzw. F3' erreicht haben.

Ein Vergleich der beiden Diagramme nach den Figuren 5a und 5b zeigt, daß die Belastungskennlinien 27 und 29 sich in ihrem oberen Endabschnitt flacher werdend krümmen, und zwar bei gleichem oder etwa gleichem Endwert E der jeweils angewendeten Prüfkraft. Weiterhin ist ersichtlich, daß in beiden Fällen gleiche oder etwa gleiche Restauslenkungen S2 und S4 festgestellt wurden, die beide größer Null sind. Das in der Auswerteeinheit 9 festgestellte Schadensresultat dieser beiden Prüfvorgänge besteht darin, daß ein Kippversatz der Mastverankerung nicht gegeben ist, daß aber der Mast selbst einen Schaden aufweist. Der Mast ist durch einen Korrosionsvorgang geschädigt worden, der sich bei den beiden Prüfvorgängen dadurch gezeigt hat, daß beim Prüfen ein Plastifizieren des Mastes im Bereich der Korrosionsstelle stattgefunden hat. Wesentliche Merkmale hierfür sind, daß die Mastschädigung bei den beiden Prüfvorgängen bei der gleichen oder etwa gleichen momentanen Prüfkraft in Verbindung mit einer bleibenden Restauslenkung erkennbar wird.

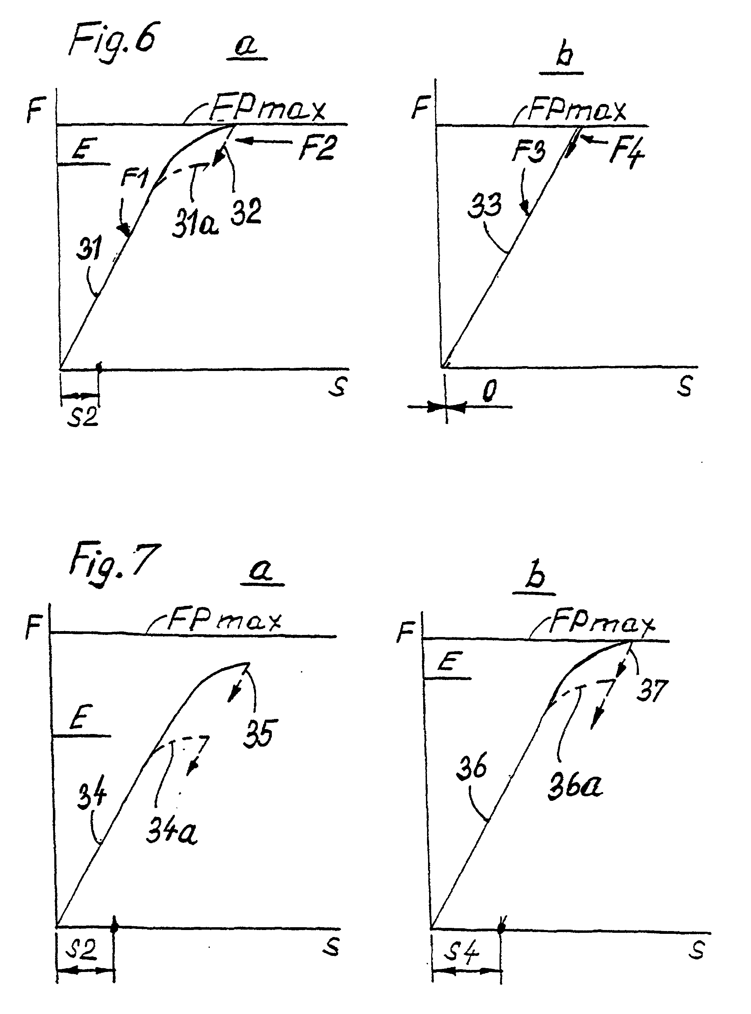

Die beiden Prüfvorgänge in den Figuren 6a und 6b offenbaren eine andere Schadensart des geprüften Mastes. Auch in diesem Fall wurden die beiden Prüfvorgänge jeweils mit einer Biegekraft wie vorstehend erläutert ausgeführt. Es wurde im ersten Prüfungsvorgang eine Belastungskennlinie 31 erhalten, die in ihrem oberen Endabschnitt eine flacher werdende Krümmung aufweist und schließlich die maximale Prüfkraft FPmax erreicht. Sie kann aber auch unterhalb der maximalen Prüfkraft bei E enden, wobei die entsprechende Krümmung mit 31a bezeichnet ist. Die nach der Belastung erfolgte Entlastung des Mastes gemäß dem Pfeil 32 ergab eine bleibende Restauslenkung S2.

Beim zweiten Prüfvorgang nach Figur 6b ergab sich ein anderes Bild des Prüfungsablaufes. Es entstand zunächst eine Belastungskennlinie 33, die jedoch insgesamt gerade verläuft und bei der die maximale Prüfkraft FPmax erreicht wurde. Die sich anschließende Entlastung des Mastes ergab keine bleibende Restauslenkung, wie in Figur 6b mit der Ziffer 0 angedeutet ist. Obwohl beim zweiten Prüfvorgang keinerlei Schaden entdeckt werden konnte, also weder am Mast selbst noch an seiner Verankerung, läßt jedoch Figur 6a zweifelsfrei auf einen Mastschaden schließen. Die im ersten Prüfvorgang festgestellte, bleibende Restauslenkung S2 deutet auf einen Riß im Mast hin, der sich beim ersten Prüfvorgang so vergrößert hat, daß eine bleibende Restauslenkung S2 festgestellt werden konnte. Der Rißschaden des Mastes läßt sich durch Figur 6b erklären, da hier die Prüfung in entgegengesetzter Richtung stattgefunden hat und dabei die Rißhälften aufeinandergedrückt wurden, so daß sich der Mast beim zweiten Prüfvorgang praktisch wie ein ungeschädigter Mast verhalten hat. Bei dem Gesamtprüfvorgang nach Figur 6 ist also ebenfalls kein Versatz der Mastverankerung festgestellt worden.

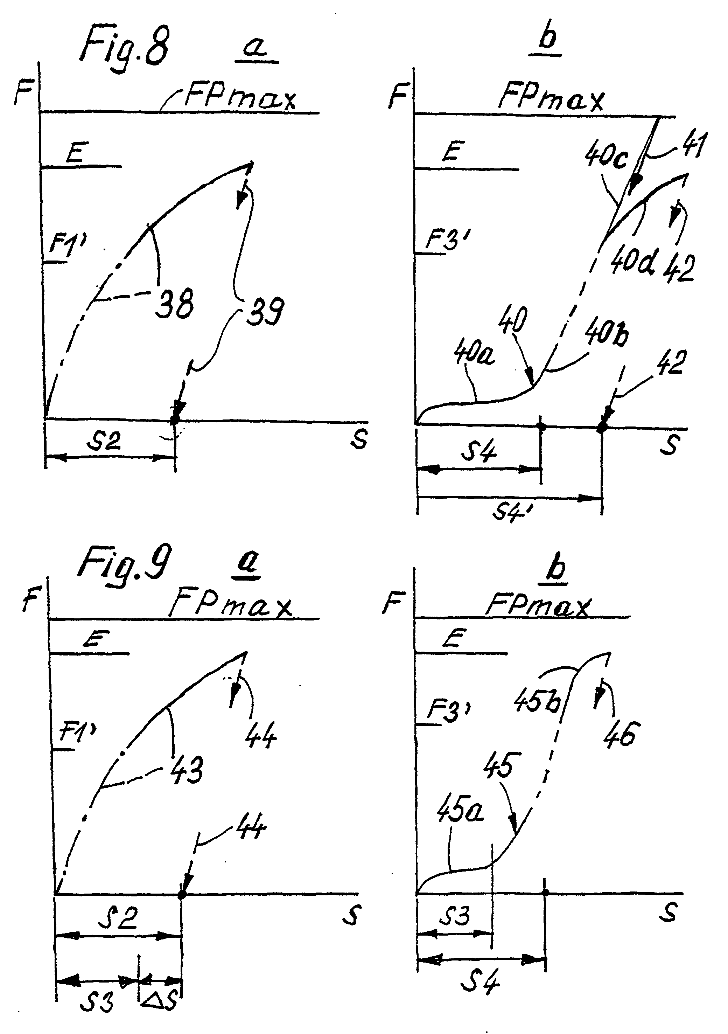

Eine noch weitere Schadensart ist aus den Figuren 7a und 7b zu entnehmen. Beim ersten Prüfvorgang nach Figur 7a (Druckkraft) ergab sich zunächst eine Belastungskennlinie 34 nach der Funktion f1. In ihrem oberen Endbereich geht diese Linie wieder in eine flacher werdende Krümmung über, und zwar bei einer momentanen Prüfkraft, die unterhalb der maximalen Prüfkraft liegt. Der Prüfvorgang wurde abgebrochen, und nach beendeter Entlastung des Mastes gemäß dem Pfeil 35, das heißt bei auf Null zurückgeführter Prüfkraft, wurde eine verbleibende Restauslenkung S2 festgestellt. Der zweite Prüfvorgang in derselben Prüfebene mit entgegengesetzter Prüfkraft (Zugkraft) ergab eine Belastungskennlinie 36 nach der Funktion f3, die in ihrem oberen Bereich bei Erreichen der maximalen Prüfkraft in eine flacher werdende Krümmung übergeht. Die sich anschließende Entlastung gemäß dem Pfeil 37 ergab eine bleibende Restauslenkung S4. In beiden Fällen kann die jeweilige Belastungskennlinie auch auf einem entsprechend niedrigeren Wert E enden, der jeweils mit 34a und 36a bezeichnet ist.

Ein Vergleich der Diagramme nach den Figuren 7a und 7b ergibt, daß die Verläufe der Belastungskennlinien in ihrem oberen Bereich als solche gleich oder im wesentlichen gleich sind, daß jedoch im zweiten Prüfvorgang eine größere momentane Prüfkraft erreicht wurde. Weiter wurden jeweils bleibende Restauslenkungen S2 und S4 festgestellt. Diese Resultate weisen auf eine Spannungsrißkorrision oder auf eine interkristalline Korrosion des Mastes hin. Im Bereich des Risses, der sich beim ersten Prüfvorgang etwas aufgeweitet hat, hat während des Betriebes des Mastes eine Korrosion stattgefunden, die beim Prüfen des Mastes für dessen Plastizierung im Bereich der Korrosion ursächlich ist, so daß beim zweiten Prüfvorgang eine höhere Prüfkraft aufgewendet werden mußte. Die beiden verbleibenden Restauslenkungen S2 uns S4 sind gleich oder etwa gleich, so daß ein Versatz der Mastverankerung bei diesen beiden Prüfvorgängen ausgeschlossen werden kann.

Ein weiteres Prüfungsergebnis ist in den Figuren 8a und 8b dargestellt. Nach Figur 8a ergab sich eine Belastungskennlinie 38 nach der Funktion f1. Diese Linie hat beispielsweise einen von Anfang an gekrümmten Verlauf, und der Prüfvorgang (Druck) wurde unterhalb der maximalen Prüfkraft FPmax abgebrochen. Die sich anschließende, gemäß dem Pfeil 39 erfolgende, jedoch nicht aufgezeichnete Entlastung des Mastes 1 und seiner Verankerung 2 führte zu einer verbleibenden und gemessenen Restauslenkung S2. Der sich anschließende zweite Prüfvorgang in derselben Prüfebene, jedoch in entgegengesetzter Richtung (Zugkraft), ergab eine Belastungskennlinie 40, die in ihrem unteren Verlauf zunächst nur sanft ansteigt und dann auf einem etwa gleichbleibenden Wert verharrt, wobei eine Auslenkung des Systemes Mast/Verankerung über eine bestimmte Strecke festzustellen ist. Danach erfolgt ein relativ steiles Ansteigen der Belastungskennlinie 40, wobei die maximale Prüfkraft FPmax erreicht werden kann, wie es mit 40c angedeutet ist. Der obere Verlauf der Linie 40 kann aber auch vor Erreichen der maximalen Prüfkraft in eine Krümmung übergehen, die mit 40d bezeichnet ist. Die jeweilige Entlastung, also die Rücknahme der Prüfkraft bis auf den Wert Null, führte gemäß den Pfeilen 41 und 42 zu bleibenden Restauslenkungen S4 und S4'.

Aufgrund der Meß- und Rechenergebnisse gemäß dem Diagramm nach Figur 8a empfehlt es sich, beim zweiten Prüfvorgang wenigstens einen Teilverlauf der Belastungskennlinie 40 zu ermitteln und aufzuzeichnen, um die verbleibenden Restauslenkungen bei der jeweiligen Entlastung besser auswerten zu können. Wie Figur 8b zeigt, kann auch der untere Teilverlauf der Belastungskennlinie 40 ein wichtiges Kriterium sein. Alternativ oder zusätzlich kann aber auch der obere Teilverlauf 40d der Linie 40 ein Kriterium darstellen. Der mittlere Teilverlauf der Belastungsksennlinie 40 wie auch aller anderen Belastungskennlinien ist relativ unwichtig, so daß dessen Ermittlung entfallen kann. Während beim ersten Prüfvorgang auf die Ermittlung und Aufzeichnung der Belastungskennlinie 38 verzichtet werden kann, wobei jedoch der Wert der höchstens erreichten Prüfkraft zu beachten ist und gegebenenfalls festgehalten werden muß, ist es wichtig, daß wenigstens im zweiten Prüfvorgang mindestens ein Teilverlauf der Belastungskennlinie 40 aufzuzeichnen und auszuwerten ist.

In einer ersten Variante der Prüfung nach Figur 8 ergibt sich, daß die festgestellte und gemessene Restauslenkung S4 gleich oder im wesentlichen gleich der Restauslenkung S2 ist, wobei die Belastungskennlinie 40 nach anfänglichem flachen Verlauf in einen steilen und etwa gleichbleibenden Verlauf bis zur maximalen Prüfkraft übergeht. Dies bedeutet, daß der Mast selbst keinen Schaden aufweist, daß aber ein Versatz der Mastverankerung vorliegt.

Bei der zweiten Variante des Prüfvorganges nach Figur 8, bei der der Höchstwert E der erreichten Prüfkraft dem Höchstwert E der Prüfkraft im ersten Prüfvorgang entspricht oder etwa entspricht und bei der eine größere Restauslenkung S4' festgestellt worden ist, ergibt sich, daß nicht nur ein Versatz der Mastverankerung vorliegt, sondern daß auch der Mast selbst einen Schaden in Form z.B. eines Risses aufweist.

Die Figuren 9a und 9b zeigen eine weitere Variante, die der letztgenannten der Figuren 8a und 8b ähnlich ist. Nach dem die Belastungskennlinie 43 nach Figur 9a vorteilhaft in ihrem oberen Teilverlauf ermittelt und aufgezeichnet oder alternativ der Höchstwert der erreichten Prüfkraft E festgehalten worden ist, erfolgte lediglich eine Entlastung des Systems Mast/Verankerung bis auf den Wert Null. Zu dieser Entlastung wurde eine bleibende Restauslenkung S2 festgestellt. Gemäß Figur 9b ergab sich im zweiten Prüfvorgang eine Belastungskennlinie 45, die anfangs flach verläuft und dann in einen steileren Verlauf übergeht und schließlich oben einen flacher werdenden, gekrümmten Endverlauf 45b aufweist. Es zeigt sich, daß der untere Teilverlauf der Linie 45 nur im Anfangsbereich 45a relativ flach verläuft, und zwar über eine Auslenkungsstrecke S3, und dann beträchtlich steiler wird. Nach beendeter Entlastung des genannten Systems gemäß dem Pfeil 46, also bei der Rückstellkraft mit dem Wert gleich Null, ergibt sich eine bleibende Restauslenkung S4. Die höchst erreichte Prüfkraft E nach Figur 9b entspricht in ihrem Wert dem Wert der Prüfkraft im ersten Prüfvorgang nach Figur 9a oder ist diesem etwa gleich.

Das Prüfungsergebnis nach Figur 9 besteht darin, daß ein Versatz der Mastverankerung und ein Schaden am Mast gegeben ist. Der Kippversatz der Mastverankerung wird bereits daran deutlich, daß die Restauslenkung S3 kleiner ist als die Restauslenkung S2. S2 setzt sich also zusammen aus S3, was auf den Mastversatz hindeutet, und aus einem Δ S, was auf einen Schaden am Mast selbst hinweist. Die Summe aus S3 und Δ S kann dabei der verbleibenden Restauslenkung S4 entsprechen.

## Patentansprüche

1. Verfahren zum Prüfen der Standfestigkeit von stehend verankerten Masten, bei dem der Mast oberhalb seiner Verankerung mit einer ansteigenden, von einem definierten Anfangswert ausgehenden Biegekraft F 1 bis höchstens zu einer maximalen, vorgegebenen Prüfkraft FPmax belastet und dabei seitlich ausgelenkt wird und bei dem der Mast nach Beendigung des Belastungsvorganges wieder entlastet wird und hierbei einer sich auf Null reduzierenden Rückstellkraft F2 unterliegt, **dadurch gekennzeichnet, daß** im Zusammenhang mit dem Entlastungsvorgang ausschließlich eine eventuell bei F2 = Null verbleibende seitliche Auslenkung S2 des Mastes festgestellt und als Schaden des Mastes und/oder seiner Verankerung ausgewertet wird.

2. Verfahren zum Prüfen der Standfestigkeit von stehend verankerten Masten, bei dem der Mast oberhalb seiner Verankerung in einem ersten Prüfvorgang mit einer ansteigenden, von einem definierten Anfangswert gemessenen Biegekraft F1 bis höchstens zu einer maximalen, vorgegeben Prüfkraft FPmax belastet und dabei seitlich ausgelenkt wird und bei dem der Mast nach Beendigung des Belastungsvorganges wieder entlastet wird und hierbei einer sich auf Null reduzierenden Rückstellkraft F2 unterliegt, und bei dem der Mast nach dem ersten Prüfvorgang in gleicher Prüfebene in einem zweiten Prüfvorgang mit einer der ersten Prüfkraft F1 entgegengesetzt gerichteten zweiten Prüfkraft F3 belastet und dabei seitlich ausgelenkt wird, wonach der Mast wieder entlastet wird und hierbei einer sich auf Null reduzierenden Rückstellkraft F4 unterliegt, **dadurch gekennzeichnet, daß** im Zusammenhang mit dem Belastungsvorgängen wenigstens die jeweils höchstens erreichte Prüfkraft FP oder mindestens ein Teilverlauf der Belastungskennlinie wenigstens des zweiten Prüfvorganges festgestellt wird, daß im Zusammenhang mit den Entlastungsvorgängen ausschließlich eine eventuell bei F2 = 0 und/oder F4 = 0 verbleibende seitliche Auslenkung S2, S4 des Mastes festgestellt wird und daß die Ergebnisse beider Feststellungen als Schaden des Mastes und/oder als Schaden seiner Verankerung ausgewertet werden.

3. Verfahren nach Anspruch 2, **dadurch gekennzeichnet, daß** als Teilverlauf der jeweiligen Belastungskennlinie deren oberer Endverlauf und/oder deren unterer Anfangsverlauf ermittelt und zur Schadensfeststellung ausgewertet wird.

4. Verfahren nach Anspruch 2 oder 3, **dadurch gekennzeichnet, daß** folgende Resultate als folgende Aussagen ausgewertet werden, wobei "Kippversatz" eine Lageänderung des Mastes bzw. seiner Verankerung am oder im Boden bedeutet:
| Resultat: | Aussage: |
|---|---|
| a) S2 > 0, S4 > 0 Belastungskennlinienverlauf gleich, deren etwa Endkraftwerte gleich | kein Kippversatz, aber Plastizieren des Mastes in beiden Prüfvorgängen |
| | |
| b) S2 > = 0, S4 = 0; S2 = 0, S4 > 0 Belastungskennlinienverlauf ungleich, im wesentlichen gradliniges Erreichen von FPmax in einem Prüfvorgang | kein Kippversatz, aber ein beim Prüfen verlängerter Riß |
| | |
| c.) S2 > 0, S4 > 0 Belastungskennlinienverlauf im wesentlichen gleich, jedoch Endkraftwerte in 2. Prüfungsvorgang höher | kein Kippversatz, aber Spannungsrißkorrosion oder interkristalline Korrosion im Mast |
| | |
| d.) S2 = S4 insgesamt ungleicher Belastungskennlinienverlauf, 2. Belastungskennlinie sehr flach beginnend und bei S4 steil ansteigend bis FPmax | nur Kippversatz im 1. Prüfvorgang |
| | |
| e.) S2 < S4' insgesamt ungleicher Belastungskennlinienverlauf, 2. Belastungslinie sehr flach beginnend und bei S4 steil ansteigend | Kippversatz im 1. Prüf vorgang, Rißerkennung beim 2. Prüfvorgang |
| | |
| f.) S2 > S3 insgesamt ungleicher Belastungskennlinienverlauf, 2. Belastungslinie sehr flach beginnend und bei S3 stark ansteigend, Prüfkräfte bei beiden Prüfvorgängen gleich. | Kippversatz und Plastizierung des Mastes beim 1. Prüfvorgang |

## Claims

1. Method for testing the stability of vertically anchored masts in which the mast is loaded above its anchorage with a bending force F1 increasing from a defined initial value up to but not exceeding a specified maximum test force FPmax and is thereby laterally deflected, and in which after the loading operation has been completed the loading of the mast is relieved in the course of which the mast is subjected to a restoring force F2 reducing to zero, **characterized in that** from the load-relieving operation only the residual lateral mast-deflection S2 (if any) at F2 = zero is observed and interpreted for indications of damage to the mast and/or its anchorage.

2. Method for testing the stability of vertically anchored masts in which the mast is loaded above its anchorage in a first test run with a measured bending force F1 increasing from a defined initial value up to but not exceeding a specified maximum test force FPmax and is thereby laterally deflected, and in which after the loading run has been completed the loading of the mast is relieved in the course of which the mast is subjected to a restoring force F2 reducing to zero, and in which following the first test run the mast is loaded in the same test plane in a second test run with a second test force F3 in the opposite direction to the first test force F1 and is thereby laterally deflected, after which the loading of the mast is relieved in the course of which the mast is subjected to a restoring force F4 reducing to zero, **characterized in that** from the loading runs at least the maximum test force FP reached in each run, or at least a part of the loading curve of at least the second test run is observed, **in that** from the load-relieving operations only the residual lateral mast-deflection S2, S4 (if any) at F2 = 0 and/or F4 = 0 is observed and **in that** the results of both observations are interpreted for indications of damage to the mast and/or damage to its anchorage.

3. Method according to Claim 2, **characterized in that** the part of each loading curve to be determined and interpreted for evidence of damage is its upper end and/or lower initial portion.

4. Method according to Claim 2 or Claim 3, **characterized in that** the results are interpreted as set out in the following table, in which "tilt" means a shift in the position of the mast and/or its anchorage on or in the ground:
| Result: | Inference: |
|---|---|
| a) S2>0, S4>0 Loading curves similar, ultimate force values similar | No tilt, but plastic deformation of mast in both test runs |
| | |
| b) S2 ≥ 0, S4 = 0; S2 = 0, S4 > 0 Loading curves dissimilar, the curve culminating at FPmax is almost a straight line in one test run | No tilt, but a crack has grown longer during testing |
| | |
| c) S2 > 0, S4 > 0 Loading curves substantially similar, but ultimate force values higher in 2nd test run | No tilt, but stress corrosion cracking or intercrystalline corrosion in mast |
| | |
| d) S2 = S4 Loading curves altogether dissimilar, 2nd loading curve starts with very gentle slope, rising steeply from around S4 to FPmax | Tilt in 1st test run only |
| | |
| e) S2 < S4' Loading curves altogether dissimilar, 2nd loading curve starts with very gentle slope, rising steeply from around S4 | Tilt in 1st test run, indication of cracking in 2nd test run |
| | |
| f) S2 > S3 Loading curves altogether dissimilar, 2nd loading curve starts with very gentle slope, rising steeply from around S3; test forces same in both test runs | Tilt and plastic deformation of the mast in 1st test run |

## Revendications

1. Procédé pour tester la stabilité de mâts ancrés verticalement, selon lequel on charge et on fait dévier latéralement le mât au-dessus de son ancrage avec une force de flexion F1 qui augmente et s'étend à partir d'une valeur initiale définie, jusqu'à une force de test maximale prédéterminée FPmax et selon lequel on décharge le mât à la fin du processus de charge, le mât étant alors soumis à une force de rappel F2 qui diminue jusqu'à zéro, **caractérisé en ce qu'**en liaison avec le processus de décharge, on détermine exclusivement une déviation latérale F2 du mât, qui subsiste éventuellement pour F2 = zéro et on l'évalue en tant qu'endommagement du mât et/ou de son ancrage.

2. Procédé pour tester la stabilité de mâts ancrés de façon fixe, selon lequel on charge et on fait dévier latéralement le mât au-dessus de son ensemble lors d'une première opération de test, avec une force de flexion F1, qui augmente et est mesurée à partir d'une valeur initiale définie, jusqu'à tout au plus une force de test maximale prédéterminée FPmax et selon lequel on décharge le mât à la fin de l'opération de charge, le mât étant alors soumis à une force de rappel F2 qui diminue jusqu'à zéro et, selon lequel on charge et on fait dévier latéralement le mât, après la première opération de test, dans le même plan de test, lors d'une seconde opération de test avec une seconde force de test F3 dirigée en sens opposé de la première force de test F1, à la suite de quoi on décharge le mât, le mât étant alors soumis à une force de rappel F4 qui retombe à la valeur zéro, **caractérisé en ce qu'**en liaison avec les processus de charge, on détermine au moins la force de test respective FP atteinte au maximum ou au moins une partie de la courbe caractéristique de charge au moins de la seconde opération de test, qu'en liaison avec les opérations de charge, on détermine exclusivement une déviation latérale F2, F4 du mât, qui subsiste éventuellement pour F2 = 0 et/ou F4 = 0 et qu'on évalue les résultats des deux déterminations en tant qu'en endommagement du mât et/ou endommagement de son ancrage.

3. Procédé selon la revendication 2, **caractérisé en ce qu'**on détermine, en tant que partie de la courbe caractéristique respective de charge, sa partie d'extrémité supérieure et/ou sa partie initiale inférieure et qu'on l'évalue pour déterminer un endommagement.

4. Procédé selon la revendication 2 ou 3, **caractérisé en ce qu'**on évalue les résultats suivants en tant qu'indications suivantes, "décalage par basculement" désignant un changement de position de mât ou de son ancrage sur ou dans le sol:
| Résultat: | Indication: |
|---|---|
| a) S2 > 0, S4 > 0 Allure identique de la courbe caractéristique de charge, ses valeurs de force terminale sont à peu près identiques | Aucun décalage par basculement, mais plastification du mât lors des deux opérations de test |
| b) S2 ≥ 0, S4 = 0; S2 = 0, S4 > 0 Allure différente de la courbe caractéristique de charge, obtention essentiellement rectiligne de FPmax lors de l'opération de test | Aucun décalage par basculement, mais une fissure prolongée lors du test |
| c) S2 > 0, S4 > 0 Allure de la courbe caractéristique de charge sensiblement identique, mais les valeurs de force terminale sont plus élevées dans la deuxième opération de test | Aucun décalage par basculement, mais corrosion avec criques de tension ou corrosion intercristalline dans le mât |
| d) S2 = S4 Allure globalement différente de la courbe caractéristique de charge, la 2ème courbe caractéristique de charge commence en étant très plate et, pour S4, augmente d'une manière pentue jusqu'à FPmax | Uniquement décalage par basculement lors de la 1ère opération de test |
| e) S2 < S4 Allure globalement différente de la courbe caractéristique de charge, 2ème courbe de charge commençant avec une forme très | Décalage par basculement lors de la 1ère opération de test, identification de fissure lors de la 2ème opération de test |
| plate et, pour S4, augmentant avec une forte pente | |
| f) S2 > S3 Allure globalement différente de la courbe caractéristique de charge, 2ème courbe de charge commençant avec une forme très plate et, pour S3, augmentant fortement, les forces de test sont identiques lors des deux opérations de test | Décalage par basculement et plastification du mât lors de la 1ère opération de test |
